# EUROPÄISCHE PATENTSCHRIFT

(11) **EP 3 573 882 B1**
(45) Veröffentlichungstag und Bekanntmachung des Hinweises auf die Patenterteilung: **09.03.2022**
(21) Anmeldenummer: 18705086.9
(22) Anmeldetag: 16.01.2018
(51) Int. Cl.: B62J 1/18, B62J 1/26

(54) **FAHRRADSATTEL**
BICYCLE SADDLE
SELLE DE BICYCLETTE

(30) Priorität: 28.01.2017 DE 202017000484 U; 28.08.2017 DE 202017004495 U
(43) Veröffentlichungstag der Anmeldung: 04.12.2019
(60) Teilanmeldung: 20178809.8
(73) Patentinhaber: Ergon International GmbH, 56070 Koblenz (DE)
(72) Erfinder: KRAUSE, Andreas, 56068 Koblenz (DE); ARNOLD, Franc, 56068 Koblenz (DE)
(74) Vertreter: dompatent von Kreisler Selting Werner - Partnerschaft von Patent- und Rechtsanwälten mbB
(86) Internationale Anmeldenummer: PCT/EP2018/050997
(87) Internationale Veröffentlichungsnummer: WO 2018/137971

(56) Entgegenhaltungen:
- DE-A1-102013 216 812
- DE-U1-202008 018 006
- DE-U1-202008 018 006
- DE-U1-202015 005 873
- DE-U1-202015 005 873
- JP-A- 2003 250 666

## Beschreibung

Die Erfindung betrifft einen Fahrradsattel.

Fahrradsättel sind über ein an einer Unterseite einer Sattelschalte angeordnetes Sattelgestell mit einer Sattelstütze verbunden. Auf der Oberseite der Sattelschale ist ein Sattelpolster zur Dämpfung angeordnet. Das Sattelpolster ist üblicherweise von einer Deckschicht oder einem Überzug bedeckt bzw. überspannt. Zur Verbesserung des Komforts von Fahrradsätteln besteht eine Vielzahl unterschiedlicher Ausgestaltungen von Fahrradsätteln. Beispielsweise sind innerhalb des Sitzpolsters Gelpads zur Verbesserung des Komforts angeordnet. Ebenso ist es bekannt, beispielsweise zwischen dem Sattelgestell und der Sattelschale insbesondere im Bereich der Sattelrückseite Dämpfungselemente vorzusehen. Die unterschiedlichsten Arten von Fahrradsätteln weisen häufig den Nachteil auf, dass der Komfort relativ gering ist und/oder die Sättel ein hohes Gewicht aufweisen.

Ein Fahrradsattel mit den Merkmalen des Oberbegriffs des Anspruchs 1 ist aus DE 20 2008 018 006 bekannt. Das Dokument DE202015005873U1 offenbart einen weiteren Fahrradsattel mit den Merkmalen des Oberbegriffs des Anspruchs 1.

Aufgabe der Erfindung ist einen Fahrradsattel mit guten Komforteigenschaften zu schaffen.

Die Lösung der Aufgabe erfolgt erfindungsgemäß durch einen Fahrradsattel gemäß Anspruch 1.

Der Fahrradsattel weist eine Sattelschale auf. Diese ist vorzugsweise aus einem harten Kunststoff hergestellt. Mit einer Oberseite der Sattelschale ist ein Sitzpolster verbunden. Dies kann gegebenenfalls von einer Deckschicht überspannt sein. Ferner kann das Sitzpolster unterschiedliche Härtebereiche, z. B. unterschiedliche Dicken und/oder Ausnehmungen aufweisen. Ferner kann das Sitzpolster, insbesondere partiell aus unterschiedlichen Materialien hergestellt sein. Erfindungsgemäß weist der Fahrradsattel ferner ein Trägerelement auf. Das Trägerelement dient zur Verbindung mit einem Sattelgestell. Das Sattelgestell dient zur Verbindung mit einer Sattelstütze. Gegebenenfalls kann auch eine unmittelbare Verbindung der Sattelstütze mit dem Trägerelement erfolgen. Ferner ist es möglich, dass das Sattelgestell als Verbindungselement zwischen der Sattelstütze und dem Trägerelement ausgebildet ist bzw. als Verbindungselement dient.

Zwischen dem vorzugsweise wiederum aus relativ steifem Material, insbesondere Kunststoff hergestellten Trägerelement und der Sattelschale, ist ein Elastomerkörper angeordnet. Hierdurch erfolgt eine Entkopplung der das Sitzpolster tragenden Sattelschale von dem im Wesentlichen starr mit der Sattelstütze verbundenen Trägerelement. Hierdurch ist es insbesondere möglich, dass die Sattelschale in Fahrtrichtung seitlich verkippt werden kann bzw. ein seitliches Verkippen der Sattelschale um ihre Längsachse, die in Fahrtrichtung weist, möglich ist. Dies erhöht bei Tretbewegungen den Komfort, da die Sattelschale die Beckenbewegung des Benutzers zumindest teilweise mitmacht bzw. sich synchron zum Becken bewegt. Hierdurch ist insbesondere auch eine Vergleichmäßigung der Druckverteilung während des Tretens erzielt. Insbesondere ist es auch möglich, mit Hilfe eines erfindungsgemäß aufgebauten Sattels Asymmetrie in dem Körper des Benutzers, wie beispielsweise ein kürzeres Bein oder ein Schiefstellung der Hüfte auszugleichen. Dies erfolgt automatisch aufgrund der Beweglichkeit der Sattelschale gegenüber dem Trägerelement. Hierdurch werden insbesondere bei Benutzung mit asymmetrischem Körper auftretende gegebenenfalls schmerzhafte Belastungen und Druckstellen vermieden.

Bei dem Fahrradsattel kann mit Hilfe des Sitzpolsters ein Einstellen des Sitzkomforts erfolgen. Dies kann insbesondere durch Wahl des Polstermaterials und/oder der geometrischen Ausgestaltung des Polsters erfolgen. So können unterschiedliche Bereiche aus vorzugsweise unterschiedlichem Material hergestellt sein. Auch kann das Material beispielsweise an unterschiedlichen Bereichen unterschiedlich verdichtet sein, so dass unterschiedliche Polsterzonen realisiert sind. Auch können Ausnehmungen und dergleichen im Sattelpolster zur Verbesserung des Sitzkomforts angeordnet sein. Zusätzlich erfolgen durch das Vorsehen des elastomeren Körpers zwischen der Sattelschale und dem Trägerelement eine Dämpfung sowie das Ermöglichen einer Kippbewegung der Sattelschale um die Längsachse.

Der Elastomerkörper ist elastisch verformbar, so dass eine Relativbewegung zwischen dem Trägerelement und der Sattelschale ermöglicht ist. Hierbei ist es insbesondere möglich, zur Ausgestaltung von Sätteln mit unterschiedlichen Komforteigenschaften Elastomerkörper aus unterschiedlichem Material vorzusehen. Bevorzugt werden thermoplastische Elastomere (TPE) eingesetzt. Bevorzugt ist die Verwendung von Schäumen, wie PU-Schäumen. Insbesondere sind geschlossenporige Schäume bevorzugt. Der Elastomerkörper weist insbesondere TPU (thermoplastisches Polyurethan) auf und ist besonders bevorzugt aus diesem Material hergestellt. Besonders geeignet ist hierfür das von der Firma BASF unter dem Produktnamen "Infinergy" hergestellte Material. Verfahren zur Herstellung von TPU sind beispielsweise in EP 692 510, WO 00/44821, EP 11 74 459 und EP 11 74 458 beschrieben. Ferner ist es bevorzugt, dass der Elastomerkörper aus EVA (Ethylenvinylacetat) hergestellt ist, bzw. EVA aufweist. Ferner können als Materialien EPP (expandiertes Polypropylen) und EPE (expandiertes Polyethylen) verwendet werden. Auch eine Kombination dieser Materialien miteinander oder eine Kombination der Materialien mit anderen Materialien ist möglich, zum Beispiel in einem Mehrschichtaufbau. Insbesondere können auch Mischungen mit Co- oder Terpolymeren eingesetzt werden. Hierdurch können unterschiedliche Dämpfungs- und Bewegungseigenschaften des Elastomer-körpers erzielt werden. Auch ist es möglich, die entsprechenden Materialien in unterschiedlichen Bereichen stärker zu verdichten, so dass hierdurch die Dämpfungs- und Bewegungseigenschaften beeinflusst werden können.

Des Weiteren ist als Material für den Elastomerkörper ein thermoplastischer elastomerer Kugelschaum geeignet. Ein derartiger Schaum wird von der Firma Sekisui unter dem Produktnamen "ELASTIL" angeboten. Dabei handelt es sich insbesondere um einen geschlossenzelligen Schaum. In bevorzugter Ausführungsform weist der Elastomerkörper erfindungsgemäß einen thermoplastischen elastomeren Kugelschaum wie insbesondere Elastil auf oder ist aus diesem hergestellt. Möglich ist auch eine Kombination mit den anderen beschriebenen, für die Ausbildung des Elastomerkörpers geeigneten Materialien.

Ein weiteres gut geeignetes Material zur Ausbildung des Elastomerkörpers ist ein Polyester-basiertes PU-Material. Besonders geeignet ist hierbei das von der Firma BASF unter dem Markennamen "Elastopan" angebotene Material. Vorzugsweise weist der Elastomerkörper ein derartiges Material auf oder ist aus diesem hergestellt, wobei es wiederum möglich ist, dieses Material mit anderen beschriebenen Materialien zu kombinieren.

Besonders bevorzugt ist es, dass der Elastomerkörper einen oder mehrere Partikelschäume aufweist und insbesondere aus einem oder mehreren Partikelschäumen hergestellt ist. Als Grundmaterial sind hierbei E-TPU, EPP, EPS, EPE oder ähnliche Schäume besonders bevorzugt. Partikelschäume bestehen hierbei in der Regel aus kleinen Kügelchen des expandierten Grundmaterials. Diese als Kügelchen oder andere Körper geformten Partikel werden in einem Werkzeug wie einer Form oder dergleichen unter Temperatur, ggf. auch unter Wasserdampf in ihre Endform gebracht. Partikelschäume haben insbesondere den Vorteil, dass sie eine geringe Dichte, eine gute Wärme- /Kälteisolation und gute Dämpfungseigenschaften aufweisen.

Der Elastomerkörper weist insbesondere in einem Sitzbereich des Sattels ein Elastizitätsmodul von 0,1 bis 10 MPa, insbesondere 0,1 bis 5 MPa und besonders bevorzugt 0,1 bis 1,0 MPa auf. Das besonders bevorzugte Material Infinergy E-TPU weist ein Elastizitätsmodul von 0,1 bis 0,5 MPa auf.

Des Weiteren ist es besonders bevorzugt, dass der Elastomerkörper aufgrund seiner geringen Dichte ein geringes Gewicht aufweist. Insbesondere weist der Elastomerkörper eine Dichte von weniger als 1 g/cm³, besonders bevorzugt weniger als 0,5 g/cm³, und insbesondere weniger als 0,2 g/cm³ auf. Eines der besonders bevorzugten Materialien, das Material Elastil, weist eine Dichte im Bereich von 0,05 bis 0,2 g/cm³ auf.

Das Reboundverhalten des Elastomerkörpers liegt vorzugsweise im Bereich von vorzugsweise mehr als 30%, insbesondere mehr als 40% und besonders bevorzugt mehr als 50% auf.

Besonderes bevorzugt ist es, dass Trägerelement und Sattelschale ausschließlich über den Elastomerkörper miteinander verbunden sind, um ein gute Entkopplung von Trägerelement und Sattelschale zu realisieren. Eine gegebenenfalls zusätzlich vorgesehene Verbindung ist hierbei vorzugsweise derart gewählt, dass hierdurch die Entkopplungs- und Dämpfungseigenschaften nicht oder nur geringfügig beeinträchtigt werden. Sofern eine Verbindung zwischen Sattelschale und Trägerelement vorgesehen sein sollte, ist es ferner bevorzugt diese im Bereich einer Sattelspitze vorzusehen, so dass die Entkopplung im Bereich einer Sattelrückseite bzw. eines Sitzbereichs des Sattels weiterhin gewährleistet ist. Insbesondere in diesem Bereich ist die Entkopplung erfindungsgemäß vorteilhaft, da hierdurch ein Verkippen des Sattels insbesondere in diesem Bereich um seine Längsachse zum Ausgleich von Beckenbewegungen möglich ist.

Das Trägerelement und/oder die Sattelschale sind vorzugsweise aus steiferem Material hergestellt als der Elastomerkörper. Bevorzugt ist zur Herstellung des Trägerelements und/oder der Sattelschale die Verwendung von Kunststoff, der gegebenenfalls faserverstärkt sein kann. Das Trägerelement und/oder das Sattelelement weisen vorzugsweise PP, Polyamide wie PA6 oder PA12 auf oder sind aus diesen Materialien hergestellt. Das Elastizitätsmodul des Trägerelements und der Sattelschale liegt vorzugsweise im Bereich von 1000 bis 10000 MPa, vorzugsweise 2500 bis 6.000 MPa und besonders bevorzugt im Bereich von 3000 bis 5000 MPa. Bevorzugt ist die Verwendung von PP (E-Modul: 1100 bis 1450 MPa), PP GF20 (E-Modul: ca. 2900 MPa) und/oder PA6 GF15 (E-Modul: 4500 bis 6500 MPa).

Erfindungsgemäß ist eine Seitenfläche des Elastomerkörpers zumindest teilweise gekrümmt. Durch eine gekrümmte Ausgestaltung der Seitenfläche ist eine bessere Druckaufnahme bzw. eine bessere Aufnahm- bzw. Abstützung der Gewichtskraft eines Fahrers möglich. Insbesondere die beim Fahren auftretenden dynamischen Bewegungen, die insbesondere eine Bewegung zwischen der Sattelschale und dem Trägerelement hervorrufen, können durch eine Krümmung der Seitenfläche des Elastomerkörpers besser aufgenommen bzw. übertragen werden. Insbesondere hat die gekrümmte Ausgestaltung der Seitenfläche den Vorteil, dass auch bei dynamischen Belastungen ein Beschädigen des Elastomerkörpers vermieden bzw. die Gefahr des Beschädigens zumindest verringert ist. Insbesondere ist je nach Ausgestaltung der Krümmung vermieden, dass der Elastomerkörper bei Belastungen über einen Randbereich der Sattelschale oder des Trägerelements gedrückt bzw. gewalkt wird. Hierdurch ist die Gefahr der Beschädigung erheblich verringert.

Die Seitenfläche des Elastomerkörpers ist insbesondere die Außenfläche des Elastomerkörpers, die zwischen der Sattelschale und dem Trägerelement angeordnet ist.

Es ist besonders bevorzugt, dass die Seitenfläche in einem Sitzbereich des Sattels gekrümmt ausgestaltet ist. Der Sitzbereich des Sattels ist derjenige Bereich, in dem die Sitzknochen des Fahrers während der Benutzung angeordnet sind. In diesem Bereich treten die größten Kräfte und Momente auf. Bevorzugt sind gekrümmte Seitenflächen im Sitzbereich und/oder im Mittelbereich und/oder im Bereich einer Sattelspitze des Sattels angeordnet. Auch eine Rückseite des Sattels kann derart ausgestaltet sein, dass auch in diesem Bereich eine Seitenfläche bzw. die Außenfläche des Elastomerkörpers gekrümmt ist.

Die Krümmung ist hierbei in bevorzugter Ausführungsform derart ausgestaltet, dass zumindest ein Teil der Seitenfläche konkav, d.h. nach innen gekrümmt ist. Hierdurch ist beim Komprimieren des Elastomerkörpers ein Ausbeulen bzw. Herausdrücken des Elastomerkörpers vermieden.

In besonders bevorzugter Ausführungsform ist die Seiten- bzw. Außenfläche des Elastomerkörpers in Umfangsrichtung des Sattels zumindest in einigen Bereichen, insbesondere im Sitzbereich zweifach gekrümmt ausgebildet. In Schnittansicht weist die Seitenfläche somit zumindest zwei unterschiedliche Krümmungen auf. Hierdurch kann die Gefahr der Beschädigung des Elastomermaterials bei insbesondere dynamischer Belastung weiter verringert werden.

Bevorzugt ist es, dass ausgehend von der Sattelschale die Seitenfläche eine erste konvexe Krümmung aufweist. Hierbei ist es bevorzugt, dass die Krümmung zwar konvex ist, jedoch eine sehr schwache konvexe Krümmung vorgesehen ist. Bevorzugt ist es, dass bei einer geraden, gedachten Verbindungslinie zwischen dem Rand der Sattelschale und dem Rand des Trägerelements die Seitenfläche des Elastomerkörpers selbst bei einer konvex ausgebildeten Krümmung in unbelastetem Zustand über diese gedachte Linie nicht vorsteht bzw. diese nicht schneidet.

An eine erste vorzugsweise konvex ausgebildete Krümmung schließt sich in besonders bevorzugter Ausführungsform eine zweite Krümmung an. Diese ist vorzugsweise konkav ausgebildet. Hierbei muss sich die zweite Krümmung nicht unmittelbar an die erste Krümmung anschließen. Beispielsweise kann auch ein Übergangsbereich zwischen den beiden Krümmungen ausgebildet sein. Durch das Vorsehen zweier insbesondere unterschiedlicher Krümmungen ist eine weitere Verbesserung, insbesondere hinsichtlich der Stabilität gegenüber dynamischen dauerhaften Belastungen realisiert.

Die Seitenfläche ist in Schnittansicht vorzugsweise S-förmig gekrümmt. Dies ist bevorzugt im Sitzbereich und/oder Mittelbereich und/oder im Bereich der Sattelspitze der Fall. In den einzelnen Bereichen können jedoch unterschiedlich starke Krümmungen vorgesehen sein. Insbesondere im Sitzbereich sind stärkere Krümmungen bevorzugt, da hier die stärksten dynamischen Belastungen auftreten.

Des Weiteren ist es bevorzugt, dass der Elastomerkörper am Rand des Trägerelements ausschließlich oberhalb des Trägerelements vorgesehen ist. Dies ist insbesondere im Mittelbereich und/oder im Sitzbereich bevorzugt. Durch derartige Ausbildung des Elastomerkörpers, der sich somit vom Rand des Trägerelements im Wesentlichen ausschließlich nach oben in Richtung der Sattelschale erstreckt ist bei starken Belastungen vermieden, dass der Elastomerkörper über den Rand des Trägerelements gedrückt wird bzw. über den Rand gewalkt wird. Des Weiteren ist es bevorzugt, dass ausgehend vom Rand des Trägerelements der Elastomerkörper unmittelbar eine konvexe Krümmung aufweist, so dass die Seitenfläche ausgehend vom Rand des Trägerelements nach innen geführt ist.

In einer weiteren bevorzugten Weiterbildung des erfindungsgemäßen Fahrradsattels ist das Trägerelement schalenförmig ausgebildet. Die Außen- bzw. die Umfangskontur der Sattelschale entspricht somit der Außen- bzw. Umfangskontur des Trägerelements in der Form. Bevorzugt ist es jedoch, dass das Trägerelement kleiner ausgestaltet ist als die Sattelschale. Es ist daher bevorzugt, dass in Draufsicht, d.h. bei montiertem Sattel in einer Draufsicht von oben das insbesondere schalenförmige Trägerelement vollständig von der Sattelschale überdeckt ist.

In einer besonders bevorzugten Weiterbildung der Erfindung verändert sich der Winkel der gedachten Verbindungslinie zwischen dem Rand der Sattelschale und dem Rand des insbesondere schalenförmig ausgebildeten Trägerelements ausgehend von einem mittleren Bereich des Sattels in Richtung einer Rückseite bzw. eines hinteren Bereichs des Sattels. Ausgehend von einem mittleren Bereich des Sattels, das heißt insbesondere einem Bereich zwischen dem Mittelbereich und dem Sitzbereich nimmt der Winkel zwischen der Verbindunglinie und einer Horizontalen in Richtung der Rückseite des Sattels zu. In dem mittleren Bereich ist der Winkel erfindungsgemäß im Bereich von 0° bis 30°, so dass beim Winkel von 0° die Verbindungslinie horizontal verläuft. In einem hinteren Bereich bzw. dem hinteren Randbereich des Sitzbereichs ist der Winkel vorzugsweise im Bereich von 30° bis 90° zur Horizontalen, insbesondere 40° bis 70° zur Horizontalen.

Die Verbindung des Sattelgestells mit dem Trägerelement erfolgt in bevorzugter Ausführungsform derart, dass das Sattelgestell, insbesondere ein vorderes Verbindungselement des Sattelgestells mit der Sattelspitze, das heißt einem in Fahrtrichtung nach vorne weisenden Bereich des Sattels verbunden ist. Des Weiteren ist es bevorzugt, dass das Sattelgestell insbesondere ein hinteres Verbindungselement des Sattelgestells mit einer Sattelrückseite, das heißt einer entgegen der Fahrtrichtung weisenden Rückseite des Trägerelements verbunden ist. Das Sattelgestell weist des Weiteren vorzugsweise zwei Streben auf. Diese können im vorderen Bereich gemeinsam mit dem Trägerelement verbunden sein. Gegebenenfalls sind die beiden Sattelstreben im vorderen Bereich auch vor dem Verbinden mit dem Trägerelement zusammengeführt. Die Verbindung im Bereich der Sattelrückseite erfolgt bei zwei Streben vorzugsweise getrennt. In diesem Fall weist das hintere Verbindungselement zwei gesonderte Verbindungsteile auf.

Die Verbindung des Sattelgestells mit dem Trägerelement im Bereich der Vorderseite und der Rückseite des Sattels verbessert den Komfort, da zwischen den beiden Verbindungsbereichen eine elastische Verformung des Sattels möglich ist. Wenngleich diese aufgrund der höheren Steifigkeit des Trägerelements geringer ist als die Verformungsmöglichkeit des Elastomerkörpers ist es bevorzugt, dass das Trägerelement aus einem Material hergestellt ist, das bei herkömmlicher Belastung während des Fahrradfahrens eine elastische Verformung ermöglicht, so dass der Komfort weiter verbessert ist.

Vorzugsweise erstreckt sich das Trägerelement von dem Bereich der Sattelspitze bis zu dem Bereich der Sattelrückseite und stellt insbesondere eine Verbindung zwischen dem vorderen und dem hinteren Aufnahmeelement des Sattelgestells dar. Gegebenenfalls kann das Sattelgestell im Bereich der Sattelspitze auch mit der Sattelschale verbunden sein. Dies ist insbesondere dann gegeben, wenn im Bereich der Sattelstütze kein Trägerelement vorgesehen ist. Das in Fahrtrichtung vordere Ende des Trägerelements kann sodann beispielsweise mit der Sattelschale oder über ein Zwischenelement mit dem Sattelgestell verbunden sein.

Besonders bevorzugt ist es, dass das Trägerelement einstückig ausgebildet ist. Ferner ist es bevorzugt, dass sich das Trägerelement in Längsrichtung über die gesamte Länge des Sattels erstreckt und insbesondere sowohl an der Sattelrückseite als auch an der Sattelspitze mit dem Sattelgestell verbunden ist. Insbesondere kann das Trägerelement ähnlich einer Sattelschale Bereiche mit unterschiedlicher Elastizität aufweisen. Dies kann durch die Verwendung unterschiedlicher Materialien und/oder unterschiedlicher Materialdicken erzielt werden. Hierdurch kann insbesondere die Elastizität bzw. Nachgiebigkeit des Trägerelements dem gewünschten Komfort angepasst werden. Insbesondere ein Durchbiegen des Trägerelements um eine Achse quer zur Längsrichtung des Sattels kann hierdurch variiert werden.

In einer besonders bevorzugten Ausführungsform der Erfindung erstreckt sich der Elastomerkörper über einen Sitzbereich des Fahrradsattels vollständig. Der Sitzbereich des Fahrradsattels ist hierbei der verbreiterte Bereich des Sattels in dem die Sitzknochen des Benutzers angeordnet sind. Des Weiteren ist es bevorzugt, dass sich der Elastomerkörper über eine Sattelspitze des Fahrradsattels und/oder über einen Mittelbereich des Fahrradsattels vollständig erstreckt. Besonders bevorzugt ist eine Kombination dieser Ausführungsformen, also dass sich der Elastomerkörper sowohl über den Sitzbereich, die Sattelspitze als auch den Mittelbereich erstreckt. Hierbei ist es bevorzugt, dass der Elastomerkörper einstückig ausgebildet ist.

Im Sitzbereich ist es bevorzugt, dass der Elastomerkörper einen Großteil einer Unterseite der Sattelschale, insbesondere die gesamte Unterseite der Sattelschale bedeckt. Zumindest bedeckt der Elastomerkörper mindestens 70%, vorzugsweise mindestens 80% und besonders bevorzugt mindestens 90% der Unterseite der Sattelschale. Des Weiteren ist es bevorzugt, dass der Elatomerkörper im Bereich der Sattelspitze, d.h. im vorderen Bereich des Fahrradsattels die Unterseite der Sattelschale zu einem wesentlichen Teil, insbesondere vollständig bedeckt. Insbesondere bedeckt der Elastomerkörper im Bereich der Sattelspitze die Unterseite der Sattelschale um mindestens 70%, vorzugsweise mindestens 80% und besonders bevorzugt mindestens 90%. Entsprechend ist es bevorzugt, dass der Elastomerkörper auch im Mittelbereich, d.h. dem Bereich des Fahrradsattels zwischen dem Sitzbereich und der Sattelspitze vorgesehen ist. Hierbei ist es wiederum bevorzugt, dass der Elastomerkörper im Mittelbereich die Unterseite der Sattelschale im Wesentlichen insbesondere vollständig bedeckt. Bevorzugt ist ein Bedecken der Unterseite der Sattelschale im Mittelbereich um insbesondere mindestens 70%, bevorzugt mindestens 80% und besonders bevorzugt mindestens 90% vorgesehen.

In einer weiteren besonders bevorzugten Ausführungsform entspricht die Außenkontur des Elastomerkörpers im Wesentlichen der Außenkontur des Fahrradsattels, insbesondere der Sattelschale. Gegebenenfalls sind die Abmessungen des Elasomerkörpers etwas kleiner als die Außenabmessungen des Fahrradsattels bzw. der Sattelschale. Beispielsweise ist die Außenkontur des Fahrradsattels umlaufend 2 bis 3 mm breiter als die Außenkontur des Elastomerkörpers.

Bei einer weiteren bevorzugten Ausführungsform erstreckt sich die Sattelschale über einen Sitzbereich des Fahrradsattels vollständig. Hierdurch kann insbesondere die von den Sitzknochen auf den Sattel übertragene Kraft gut aufgenommen werden. Bevorzugt ist es eine derartige Sattelschale mit einem sich ebenfalls vollständig über den gesamten Sitzbereich erstreckenden Elastomerkörper zu verbinden.

Der Elastomerkörper überdeckt hierbei vorzugsweise den gesamten Fahrradsattel. Je nach verwendetem Material ist es bevorzugt, dass der Elastomerkörper eine Dicke von 5 bis 15 mm, insbesondere 5 bis 10 mm aufweist. Es ist besonders bevorzugt, dass insbesondere der Elastomerkörper und besonders bevorzugt dessen Dicke und Material derart gewählt ist, dass seitliche Randbereiche des Sitzbereichs um bis zu 5mm durch die Belastung des Benutzers nach unten bewegt werden können.

Des Weiteren ist es bevorzugt, dass sich die Sattelschale über die Sattelspitze und/oder den Mittelbereich des Sattels, insbesondere vollständig erstreckt. Bei entsprechender Ausgestaltung des Elasomerkörpers ist es hierbei wiederum bevorzugt, dass die Außenkontur der Sattelschale derjenigen des Elastomerkörpers entspricht. Insbesondere ist die Sattelschale einstückig ausgebildet und erstreckt sich in besonders bevorzugter Ausführungsform über den Sitzbereich, den Mittelbereich und den Bereich der Sattelspitze. Hierbei ist es wiederum bevorzugt, dass der Elastomerkörper ebenfalls einstückig ausgebildet ist und sich über diese drei Bereiche des Sattels erstreckt. Eine Außenkontur der Sattelschale entspricht in besonders bevorzugte Ausführungsform der Außenkontur des Elastomerkörpers.

Die Sattelschale, die in bevorzugter Ausführungsform aus härterem bzw. steiferem Material als der Elastomerkörper hergestellt ist, kann ähnlich dem Trägerelement Bereiche aufweisen, die aus unterschiedlichem Material hergestellt sind und/oder eine unterschiedliche Dicke aufweisen. Beispielsweise ist es wie auch bei dem Trägerelement möglich, Stege, Verdickungen und dergleichen vorzusehen. Hierdurch können die Elastizitätseigenschaften in unterschiedlichen Bereichen variiert werden und somit der Komfort des Fahrradsattels je nach der Anforderung, für die das entsprechende Sattelmodell hergestellt wurde, variiert werden.

Anstelle einer flächigen, in sich geschlossenen Sattelschale kann auch eine partielle Sattelschale vorgesehen sein. Beispielsweise kann nur im Sitzbereich und/oder nur im Mittelbereich und/oder nur im Bereich der Sattelspitze eine flächige Sattelschale vorgesehen sein. Des Weiteren ist es möglich, dass die Sattelschale Ausnehmungen aufweist. Die Ausnehmungen können insbesondere auch dazu dienen, dass insbesondere Material des Elastomerkörpers durch die Sattelschale hindurchdrängen und insofern eine formschlüssige Verbindung mit der Sattelschale und gegebenenfalls auch eine adhäsiv oder chemische Verbindung mit dem Sattelpolster erfolgt.

In besonders bevorzugter Ausführungsform ist die Sattelschale rahmenförmig ausgebildet. Die Sattelschale ist hierbei entsprechend eines Rahmens derart ausgebildet, dass sie im Randbereich zwischen dem Elastomerkörper und dem Sattelpolster als umlaufender Rahmen vorgesehen ist. Der Rahmen weist hierbei vorzugsweise eine Breite von weniger als 20 mm, insbesondere weniger als 10 mm auf. Die Breite des Rahmens kann in Umfangsrichtung auch variieren.

In besonders bevorzugter Ausführungsform des erfindungsgemäßen Fahrradsattels ist das Trägerelement im Sitzbereich angeordnet und insbesondere der Sattelschale gegenüberliegend vorgesehen.

Die Größe des Trägerelements im Sitzbereich beträgt vorzugsweise 70% bis 90% der Größe der Sattelschale im Sitzbereich. Bei der Größe handelt es sich hierbei insbesondere um die im montierten Zustand des Sattels auf eine Horizontalebene projizierte Fläche.

Vorzugsweise ist das Trägerelement auch im Bereich der Sattelspitze, insbesondere Sattelschale gegenüberliegend angeordnet. Die Größe des Trägerelements in diesem Bereich beträgt vorzugsweise 70% bis 90% der Größe der Sattelschale im Bereich der Sattelspitze.

Des Weiteren ist es besonders bevorzugt, dass das Trägerelement insbesondere zusätzlich auch im Mittelbereich des Sattels, d.h. im Bereich zwischen der Sattelspitze und dem Sitzbereich angeordnet ist. Die Größe des Trägerelements beträgt vorzugsweise 70% bis 90% der Größe der Sattelschale in diesem Bereich.

Besonders bevorzugt ist es, dass das Trägerelement schalenförmig ausgebildet ist. Insbesondere weist das Trägerelement einen Sitzbereich, einen Mittelbereich und einen Bereich einer Sattelspitze auf, wobei diese drei Bereiche vorzugsweise einstückig sind, so dass ein einziges gemeinsames Trägerelement vorgesehen ist. Die Größe des Trägerelements beträgt vorzugsweise mindestens 70% bis 90% der Größe der gesamten Sattelschale. Die vorstehenden Größenangaben verstehen sich immer in der entsprechend horizontal projizierten Fläche.

In bevorzugter Ausführungsform weist das Trägerelement ein von der Sattelschale wegweisendes, bzw. in montiertem Zustand nach unten weisendes Träger-Randelement auf. Das Randelement ist vorzugsweise im Sitzbereich und/oder im Mittelbereich und/oder im Bereich der Sattelspitze und/oder im Bereich der Rückseite des Sattels angeordnet. Bevorzugt ist es, dass bezogen auf die Längsachse des Fahrradsattels das Träger-Randelement symmetrisch, d.h. einander gegenüberliegend angeordnet ist. In einer besonders bevorzugten Ausführungsform ist das Randelement umlaufend, d.h. insbesondere ohne Unterbrechungen ausgebildet. Die Höhe des Randelements kann in sämtlichen unterschiedlichen Ausführungsformen variieren. Insbesondere weist das Randelement eine Höhe von 3 bis 5 mm auf. Gegebenenfalls kann das Randelement in unterschiedlichen Bereichen auch unterschiedliche Höhen aufweisen. Hierdurch kann beispielsweise die Steifigkeit des Trägerelements auf einfache Weise beeinflusst werden.

In einer weiteren bevorzugten Ausführungsform weist die Sattelschale ein Schalen-Randelement auf. Das Schalen-Randelement weist in Richtung des Trägerelements bzw. bei montiertem Sattel nach unten. Das Schalen-Randelement kann zusätzlich oder anstelle eines Träger-Randelements vorgesehen sein. Das Schalen-Randelement ist vorzugsweise im Sitzbereich und/oder im Mittelbereich und/oder im Bereich der Sattelspitze und/oder im Bereich der Sattelrückseite angeordnet. Bevorzugt ist es, dass das Schalen-randelement umlaufend ausgebildet ist. Die Höhe des Schalen-Randelements kann variieren und insbesondere in unterschiedlichen Bereichen unterschiedlich ausgestaltet sein. Die Höhe des Randelements liegt vorzugsweise im Bereich von 3 bis 5 mm. Das Schalen-Randelement ist vorzugsweise derart ausgebildet, dass es symmetrisch zur Längsachse des Sattels ist, d.h. stets einander gegenüberliegende Schalen-Randelemente vorgesehen sind. Die Höhe des Schalen-Randelements kann variieren. Hierdurch können die Elastizitätseigenschaften der Sattelschale verändert werden. Insbesondere wenn sowohl ein Träger-Randelement als auch ein Schalen-Randelement vorgesehen ist, ist es bevorzugt, dass die entsprechenden Bereiche der einzelnen Randelemente derart gewählt sind, dass stets einander gegenüberliegende Randelemente vorgesehen sind. Ist beispielsweise im Sitzbereich ein Träger-Randelement vorgesehen, ist es bevorzugt, dass im Sitzbereich auch ein Schalen-Randelement vorgesehen ist. Des Weiteren ist es bevorzugt, dass einander gegenüberliegende Randelemente im Wesentlichen dieselbe Höhe aufweisen. Bei einer weiteren bevorzugten Ausführungsform des erfindungsgemäßen Fahrradsattels ist insbesondere im Mittelbereich des Fahrradsattels ein mit dem Träger-Randelement und/oder dem Schalen-Randelement verbundenes Halteelement angeordnet. Das Halteelement dient insbesondere zum Greifen des Sattels, beispielsweise zum Hochheben oder Tragen des Fahrrads. Das Halteelement ist hierbei vorzugsweise derart ausgebildet, dass es einen Bereich zwischen dem Trägerelement und der Sattelschale zumindest teilweise überbrückt bzw. abdeckt. Hierdurch ist insbesondere beim Tragen oder Heben des Fahrrads am Fahrradsattel ein Beschädigen des Elastomerkörpers vermieden. Vorzugsweise ist das Halteelement nur an einem der beiden Randelemente angeordnet, so dass über das Halteelement keine Verbindung der Sattelschale mit dem Trägerelement erfolgt. Dies würde die Dämpfungseigenschaften des Elastomerkörpers gegebenenfalls beeinflussen. Sofern eine Verbindung der Sattelschale mit dem Trägerelement über das Halteelement besteht, ist das Halteelement vorzugsweise aus einem entsprechend elastischen Material ausgebildet, so dass allenfalls eine geringe Beeinflussung der Elastizität des Elastomerkörpers bzw. der Bewegungsmöglichkeit der Sattelschale gegenüber dem Trägerelement erfolgt.

Besonders bevorzugt ist es, dass das Halteelement mit einem Träger-Randelement verbunden ist. Sofern kein Träger-Randelement vorhanden ist, ist es bevorzugt, dass das Halteelement direkt mit dem Trägerelement verbunden ist. Hierdurch besteht die Möglichkeit das Fahrrad an dem Trägerelement zu halten bzw. hoch zu heben, ohne dass der Elastomerkörper beschädigt wird. Es wirken somit beim Tragen keine Kräfte auf den Elastomerkörper. Vorzugsweise sind zwei, insbesondere einander gegenüberliegende Halteelemente im Mittelbereich des Fahrradsattels angeordnet. Zusätzlich kann ein derartiges Halteelement beispielsweise auch im Bereich der Sattelrückseite vorgesehen sein. Das Halteelement erstreckt sich vorzugsweise über mindestens 50%, insbesondere über mindestens 75% des Mittelbereichs, d.h. der Abmessungen des Mittelbereichs in Längsrichtung des Sattels.

Bei einer weiteren bevorzugten Ausführungsform der Erfindung weist der Elastomerkörper einen Ansatz auf, der vorzugsweise einstückig mit dem Elastomerkörper ausgebildet ist. Der Ansatz erstreckt sich zumindest teilweise zwischen dem Träger-Randelement und dem Schalen-Randelement. Die Höhe des Ansatzes entspricht hierbei vorzugsweise der Höhe der Randelemente in diesem Bereich. Sofern in diesem Bereich nur ein Träger-Randelement oder nur ein Schalen-Randelement vorgesehen ist, weist der Ansatz vorzugsweise eine entsprechende Höhe dieses Randelements auf.

Der Elastomerkörper, der zwischen der Sattelschale und dem Trägerelement angeordnet ist, ist vorzugsweise mit beiden Elementen fest verbunden. Der Elastomerkörper bedeckt mindestens 70%, insbesondere mindestens 80% und insbesondere mindestens 90% und besonders bevorzugt mindestens 100% der Unterseite der Sattelschale. Bevorzugt ist es ferner, dass der Elastomerkörper mindestens 70%, insbesondere mindestens 80% und insbesondere mindestens 90% und besonders bevorzugt mindestens 100% einer Oberseite des Trägerelements bedeckt. Hierdurch sind eine gute Verbindung zwischen der Sattelschale und dem Trägerelement hergestellt und gute Dämpfungseigenschaften realisiert.

Bei einer weiteren besonders bevorzugten Ausführungsform ist der Elastomerkörper zumindest teilweise in Seitenansicht des Fahrradsattels sichtbar. Dies ist insbesondere je nach Ausgestaltung der Randelemente auf einfache Weise möglich. Dies hat den Effekt, dass die Dämpfungscharakteristik des Sattels unmittelbar für den Benutzer sichtbar ist. Auch die doppelschalige Ausgestaltung des Sattels durch Vorsehen einer Sattelschale und eines gegenüberliegenden Trägerelements ist hierdurch gut sichtbar.

Des Weiteren ist es bevorzugt, dass der erfindungsgemäße Fahrradsattel derart ausgestaltet ist, dass die Sattelschale gegenüber dem Trägerelement bei Belastung, d.h. bei Benutzung um eine sich in Fahrtrichtung erstreckende Längsachse des Sattels schwenkbar ist. Insbesondere ist ein Schwenken der Sattelschale gegenüber dem Trägerelement um 2° bis 10° und besonders bevorzugt um 2° bis 5° gewährleistet.

In besonders bevorzugter Weiterbildung der Erfindung ist der Elastomerkörper flächig mit einer Unterseite der Sattelschale verbunden. Bevorzugt ist es ferner, dass ebenfalls eine flächige Verbindung mit dem Trägerelement besteht.

Bei einer bevorzugten Weiterbildung der Erfindung ist die Sattelschale nicht eben ausgestaltet, sondern weist gekrümmte Bereiche auf. Insbesondere an der Außenseite des Sattels ist es bevorzugt, dass die Sattelschale einen nach unten weisenden Rand aufweist. Hierdurch ist die seitliche Steifigkeit des Sattels verbessert. Bei einer derartigen Sattelschale entsteht unter der Sattelschale insbesondere im Sitzbereich ein Raum. Der Elastomerkörper ist in bevorzugter Ausführungsform zumindest teilweise in diesem Raum angeordnet.

Bei einer bevorzugten Weiterbildung der Erfindung weist der Elastomerkörper einen Ansatz auf, der einen äußeren Rand der Sattelschale in Umfangsrichtung zumindest teilweise umgibt. Der Ansatz des Elastomerkörpers ist in montiertem Zustand somit seitlich neben bzw. seitlich außerhalb der Sattelschale angeordnet. In Seitenansicht verdeckt der Ansatz die äußere Kante bzw. den äußeren Rand der Sattelschale. Sofern der Ansatz vollständig umlaufend ausgebildet ist, ist der Rand der Sattelschale nicht sichtbar. Des Weiteren ist es bevorzugt, dass dieser Ansatz auch das Sattelpolster seitlich geringfügig überdeckt bzw. in das Sattelpolster hineinragt. Der Ansatz des Elastomerkörpers weist somit eine Höhe auf, die größer ist als die Höhe der Sattelschale im Bereich des äußeren Randes der Sattelschale. Insofern wird von dem Elastomerkörper auch eine untere äußere Kante des Sattelpolsters abgedeckt. Sattelpolster werden üblicherweise derart hergestellt, dass die Kante des Sattelpolsters gegebenenfalls von Hand oder maschinell geschnitten wird. Eine derartige Schnittkante ist gegebenenfalls unsauber oder weist eine gewisse Toleranz auf. Durch Vorsehen des Ansatzes an dem Elastomerkörper ist diese Schnittkante abgedeckt.

Ein Verfahren zur Herstellung eines Fahrradsattels wie vorstehend beschrieben kann derart erfolgen, dass die Sattelschale und das Trägerelement in eine

Form, insbesondere eine Spritzform eingelegt werden. Das Einlegen erfolgt derart, dass zwischen der Sattelschale und dem Trägerelement ein Abstand angeordnet ist, wobei die beiden Elemente einander gegenüberliegend angeordnet sind, so dass eine Oberseite des Trägerelements der Unterseite der Sattelschale gegenüberliegt. Bevorzugt ist es selbstverständlich, dass die Bauteile zu einer Längsachse des Sattels symmetrisch ausgebildet und entsprechend symmetrisch angeordnet sind. Erfindungsgemäß erfolgt sodann ein Einbringen bzw. Einspritzen des Materials des Elastomerkörpers zwischen die Sattelschale und das Trägerelement. Hierfür erfolgt vorzugsweise unmittelbar ein Verbinden des Materials des Elastomerkörpers mit der Unterseite der Sattelschale bzw. der Oberseite des Trägerelements.

Anschließend oder gegebenenfalls im selben Herstellungsschritt kann auch das Sattelpolster aufgebracht bzw. aufgespritzt werden.

Nachfolgend wird die Erfindung anhand einer bevorzugten Ausführungsform unter Bezugnahme auf die anliegenden Zeichnungen näher erläutert.

Es zeigen:
- Fig. 1: eine schematische Draufsicht eines Fahrradsattels,
- Fig. 2: eine schematische Seitenansicht des in Fig. 1 dargestellten Fahrradsattels,
- Fig. 3: eine schematische Schnittansicht entlang der Linie III-III in Fig. 1,
- Fig. 4: eine schematische Schnittansicht entlang der Linie IV-IV in Fig. 1,
- Fig. 5: eine schematische Schnittansicht einer erfindungsgemäßen Ausführungsform entlang der Linie IV-IV in Fig. 1,
- Fig. 6: eine schematische Schnittansicht einer alternativen erfindungsgemäßen Ausführungsform entlang der Linie IV-IV in Fig. 1,
- Fig. 7: eine schematische Unteransicht einer weiteren bevorzugten Ausführungsform des erfindungsgemäßen Fahrradsattels,
- Fign. 7a bis 7d: unterschiedliche Schnittansichten des in Fig. 7 dargestellten Fahrradsattels, und
- Fig. 8: ein Längsschnitt des in Fig. 7 dargestellten Fahrradsattels,
- Fign. 8a bis 8c: Darstellungen des rückseitigen Bereichs der in Fig. 9 dargestellten Schnittansicht des Fahrradsattels in unterschiedlichen Belastungszuständen.

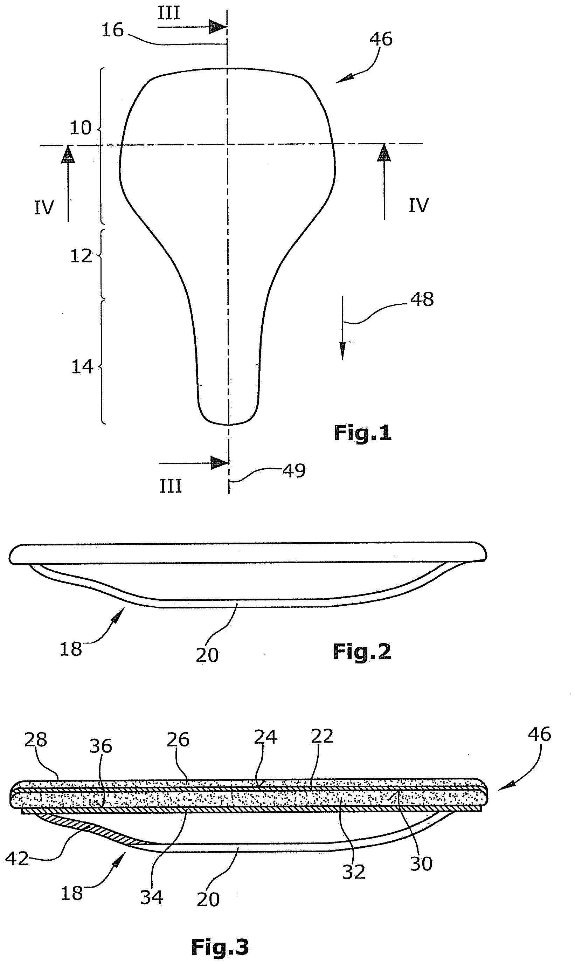

Die Figuren 1 bis 4 zeigen einen aus DE 20 2015 005 873 bekannten Fahrradsattel.

Ein Fahrradsattel weist in Draufsicht einen Sitzbereich 10 auf, an den sich ein Mittelbereich 12 anschließt. Der Mittelbereich 12 geht in die Sattelspitze 14 über. Hierbei ist die Sattelspitze 14 schmal ausgebildet und der Sitzbereich 12 breit ausgebildet, so dass im Sitzbereich der größte Teil des Gewichts des Fahrers insbesondere über die Sitzknochen aufgenommen wird. Der Fahrradsattel ist zu einer Mittelachse 16, die in Längsrichtung verläuft, symmetrisch ausgebildet.

Eine Unterseite des Fahrradsattels ist mit einem Sattelgestell 18 (Fig. 2) verbunden. Die dargestellte Ausführungsform des Sattelgestells 18 weist insbesondere zwei sich im Wesentlichen in Linksrichtung des Sattels erstreckende Streben auf. In einem mittleren Bereich 20 der beiden Streben des Sattelgestells 18 ist dieses über ein Befestigungselement mit der Sattelstütze verbindbar.

Der erfindungsgemäße Fahrradsattel weist eine aus relativ steifem Material hergestellte Sattelschale 22 (Fig. 3) auf. An einer Oberseite 24 der Sattelschale 22 ist ein Sattelpolster 26 angeordnet. Dieses kann wie im dargestellten Ausführungsbeispiel von einer Deckschicht 28 überspannt sein.

An einer Unterseite 30 der Sattelschale 22 ist ein Elastomerkörper 32 an geordnet. Im dargestellten Ausführungsbeispiel erstreckt sich der Elastomerkörper 32 über die gesamte Unterseite 30 der Sattelschale 32 und ist insbesondere flächig mit dieser verbunden.

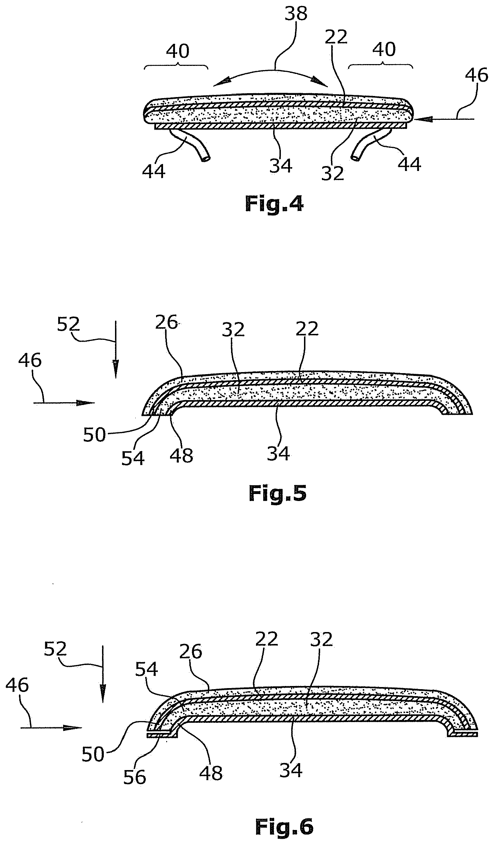

Der Sattelschale 22 gegenüber liegend ist ein Trägerelement 34 vorgesehen. Der Elastomerkörper 32 ist somit zwischen der Sattelschale 22 und dem Trägerelement 34 angeordnet. Die Verbindung zwischen einer Oberseite 36 des Trägerelements 34 und dem Elastomerkörper 32 erfolgt vorzugsweise wiederum über die gesamte Oberfläche 36. Da die Sattelschale 22 vorzugsweise nicht oder vorzugsweise nur im Bereich der Sattelspitze 14 mit dem Trägerelement 34 verbunden ist, ist die Sattelschale 22 von dem Trägerelement 34 entkoppelt. Hierdurch ist es in besonders bevorzugter Ausführungsform möglich, dass die Sattelschale 22 insbesondere im Sitzbereich 10, wie durch den Pfeil 38 (Fig. 4) angedeutet, verkippt werden kann. In äußeren Bereichen 40 des Sitzbereichs kann bei entsprechender Belastung die Sattelschale somit um beispielsweise bis zu 5 mm nachgeben. Hierdurch ist die Kippbewegung des Beckens während des Fahrradfahrens teilweise ausgeglichen bzw. der Sattel macht die Kippbewegung des Beckens mit.

Das Sattelgestell 18 ist über ein vorderes Verbindungselement 42 mit dem Trägerelement 34 im Bereich der Sattelspitze 14 verbunden. Ferner ist das Sattelgestell 18 über zwei hintere Verbindungsteile 44 mit einer Sattelrückseite 46, die sich insbesondere entgegen einer Fahrtrichtung 48 (Fig. 1) an den Sitzbereich anschließt.

Bei der in Figur 4 dargestellten Ausführungsform ist die Sattelschale 22 gegenüber dem Trägerelement 34 auch im äußeren Randbereich 40 in einem Abstand zueinander angeordnet. Hierdurch ist der Elastomerkörper 32 in einer Seitenansicht (Pfeil 46) für den Benutzer sichtbar.

Bei einer ersten alternativen Ausführungsform (Fig. 5) weist das Trägerelement ein vorzugsweise umlaufendes Träger-Randelement 48 auf. In der dargestellten Ausführungsform weist auch die Sattelschale 22 ein insbesondere umlaufendes Schalen-Randelement 50 auf. Beide Randelemente 48, 50 weisen in montiertem Zustand nach unten (Pfeil 52). Im dargestellten Ausführungsbeispiel ist zwischen den beiden Randelementen 48, 50 ein Ansatz 54 des Elastomerkörpers 32 angeordnet. Ebenso kann auch nur eines der beiden Randelemente 48, 50 vorgesehen sein. Insbesondere können in Längsrichtung auch nur Teile mit Randelementen versehen sein. Insbesondere, wenn das Randelement 50 nicht oder zumindest in Teilbereichen nicht vorgesehen ist, ist der Elastomerkörper 32, insbesondere der Ansatz 54 des Elastomerkörpers 32 in Seitenansicht (Pfeil 46) für den Benutzer gut sichtbar.

Bei einer weiteren alternativen Ausführungsform der Erfindung (Fig. 6) sind entsprechend der in Fig. 5 dargestellten Ausführungsform Randbereiche 48, 50 vorgesehen, wobei diese wiederum nicht unbedingt umlaufend sein müssen. Zusätzlich ist im dargestellten Ausführungsbeispiel mit dem Randbereich 48 des Trägerelements 34 ein Halteelement 56, insbesondere einstückig mit dem Randelement 48 und dem Trägerelement 34 ausgebildet. Das Halteelement 46 verläuft im Wesentlichen horizontal und überdeckt den Ansatz 54 des Elastomerkörpers 32. Hierdurch ist ein einfaches Greifen des Sattels, beispielsweise zum Tragen des Fahrrads möglich, wobei sichergestellt ist, dass der Elastomerkörper hierdurch nicht belastet oder gar beschädigt wird.

Das Halteelement 56 ist vorzugsweise im Mittelbereich 12 vorgesehen und ragt in besonders bevorzugter Ausführungsform in den Sitzbereich 10. Insbesondere kann das Halteelement 56 auch umlaufend ausgebildet sein.

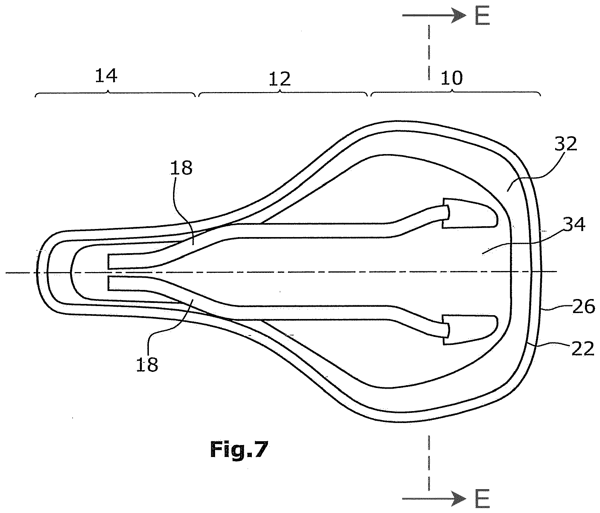

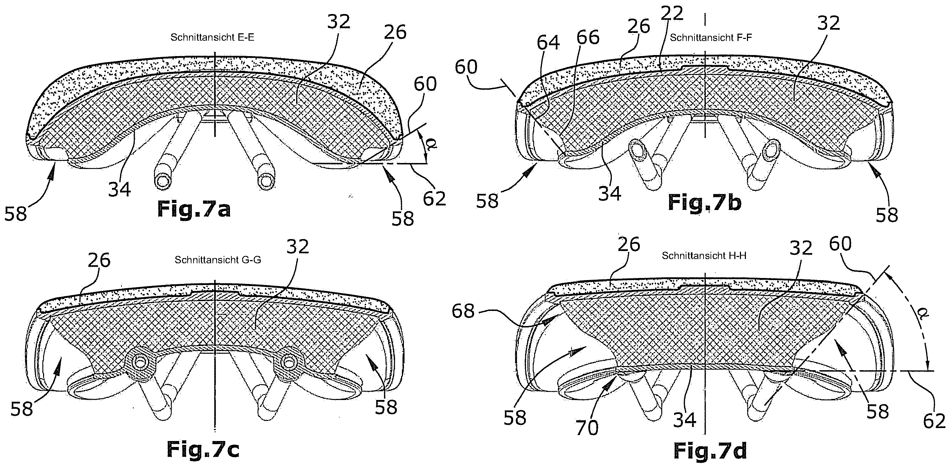

Nachfolgend ist anhand der Fign. 7 bis 9c eine weitere bevorzugte Ausführungsform des erfindungsgemäßen Fahrradsattels dargestellt. Hierbei sind ähnliche und identische Bauteile mit denselben Bezugszeichen gekennzeichnet.

Fig. 7 zeigt eine bevorzugte Ausführungsform des Fahrradsattels von unten. Eine Unterseite des schalenförmig ausgebildeten Trägerelements 34 ist mit den beiden Streben des Sattelgestells 18 verbunden. Die Verbindung erfolgt hierbei einerseits im Bereich einer Sattelspitze 14 und andererseits in einem hinteren Bereich des Sitzbereichs 10 des Fahrradsattels. Ferner ist in der in Fig. 7 dargestellten Ansicht von unten der Rand der Sattelschale 22 sowie der zwischen Trägerelement und Sattelschale 22 angeordnete Bereich des Elastomerkörpers 32 sichtbar. Insbesondere ist in der Ansicht von unten (Fig. 7) sichtbar, dass das schalenförmige Trägerelement 34 kleiner ausgebildet ist als die Sattelschale 22. In Draufsicht ist das Trägerelement 34 vollständig innerhalb der Sattelschale 22 angeordnet.

Zur Verdeutlichung der Ausgestaltung einer Seitenfläche bzw. Außenfläche 58 eines Elastomerkörpers 32 sind in den Fign. 7a bis 7d unterschiedliche Schnittansichten gezeigt. Hierbei zeigt die Fig. 7a den Schnitt E-E, die Fig. 7b den Schnitt F-F, die Fig. 7c den Schnitt G-G und die Fig. 7d den Schnitt H-H in Fig. 7.

In den Fign. 7a bis 7d ist ersichtlich, dass die Seitenfläche 58 des Elastomerkörpers 32 stets gekrümmt ausgebildet ist. Allerdings verändert sich die Neigung der Seitenfläche. Ausgehend von dem Schnitt E-E im vorderen Teil des Sitzbereichs 10 bzw. im Übergangsbereich zwischen dem Mittelbereich 12 und dem Sitzbereich 10 wird die Ausrichtung der Seitenfläche steiler. Wie in Fig. 7a durch eine gestrichelte Linie 60 angedeutet, weist die Seitenfläche 60 im montierten Zustand gegenüber einer Horizontalen 62 einen deutlich kleineren Winkel als im hinteren Bereich des Sattels (Schnitt H-H, Fig. 7d) auf. Ausgehend von einem Übergangsbereich zwischen dem Mittelbereich 12 und dem Sitzbereich 10 des Sattels nimmt der Winkel der Seitenfläche 58 gegenüber einer Horizontalen 62 somit in Richtung einer Sattelrückseite zu. Im Übergang zwischen dem Mittelbereich 12 und dem Sitzbereich 10 liegt ein Winkel α zwischen der Horizontalen 62 und der Verbindungslinie 60 im Bereich von 0° bis 30°. Im hinteren Bereich des Sattels, d.h. im äußeren Teil des Sitzbereichs 10 liegt der Winkel α vorzugsweise im Bereich von 30° bis 90° insbesondere 40° bis 70°.

Die Seitenfläche 58 weist wie in allen dargestellten Schnitten (Fig. 7a bis 7d) sichtbar eine zweifache Krümmung auf. Eine erste Krümmung 64 weist der Elastomerkörper 32 in dem unterhalb der Sattelschale 22 angeordneten Bereich bzw. in den sich unmittelbar an die Sattelschalte 22 anschließenden Bereich auf. Diese erste Krümmung 64 ist leicht konvex gekrümmt. Bevorzugt ist es hierbei, dass die Krümmung 64 in unbelastetem Zustand, wie in den Fign. 7a bis 7d dargestellt, eine Verbindungslinie 60, die die beiden Kanten bzw. Ränder der Sattelschale 22 und des schalenförmigen Trägerelements 34 verbindet, nicht oder allenfalls geringfügig schneidet. An die erste Krümmung 64 schießt sich eine zweite Krümmung 66 an. Die Krümmung 66 ist konkav gekrümmt, so dass die Seitenfläche 58 in diesem Bereich von der Linie 60 nach innen weg geführt ist. Zwischen den beiden Krümmungen 64, 66 kann ein unmittelbarer oder beispielsweise auch ein linearer Übergang erfolgen.

Eine weitere bevorzugte Besonderheit der Ausgestaltung des erfindungsgemäßen Fahrradsattels besteht darin, dass der Elastomerkörper 32 seitlich weder über die Sattelschale 22 noch über das Trägerelement 34 im Bereich der entsprechenden Verbindungen 68, 70 (Fig. 7d) vorsteht. Hierdurch ist insbesondere bei einer dynamischen Verformung des Elastomerkörpers 32 ein Beschädigen des Elastomerkörpers 32 insbesondere durch die Kante der Sattelschale 22 bzw. des Trägerelements 34 in den Bereichen 68 bzw. 70 vermieden.

Anstelle einer Sattelschale kann ein Sattel gemäß dieser Ausführungsform ein oder mehrere Versteifungselemente aufweisen, die zwischen dem Elastomerkörper 32 und dem Sattelpolster 26 angeordnet sind. Diese sind vorzugsweise im Randbereich zwischen diesen beiden Körpern angeordnet und verlaufen insbesondere in Längs- bzw. in Umfangsrichtung. Vorzugsweise sind derartige Versteifungselemente in dem Sitzbereich 10 und/oder dem Mittelbereich 12 und/oder im Bereich 14 der Sattelspitze sowie gegebenenfalls auch in einem hinteren bzw. rückseitigen Bereich angeordnet. Vorzugsweise kann es sich hierbei, wie vorstehend anhand der Erfindung mit Sattelschale beschrieben, um eine rahmenförmige Sattelschale handeln.

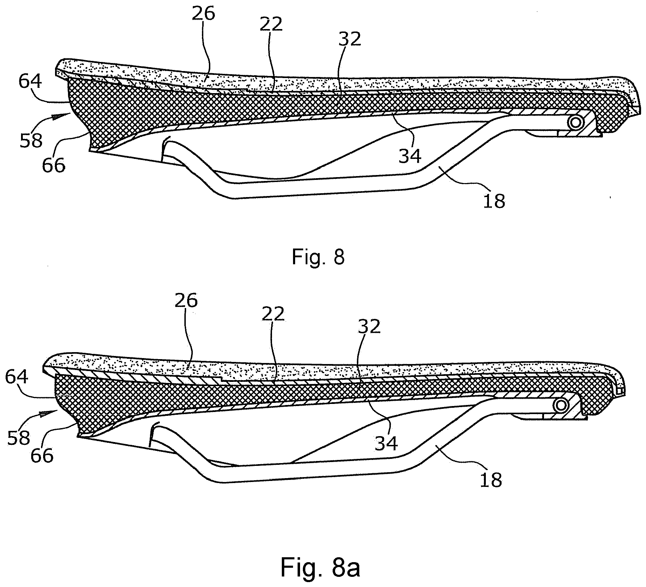

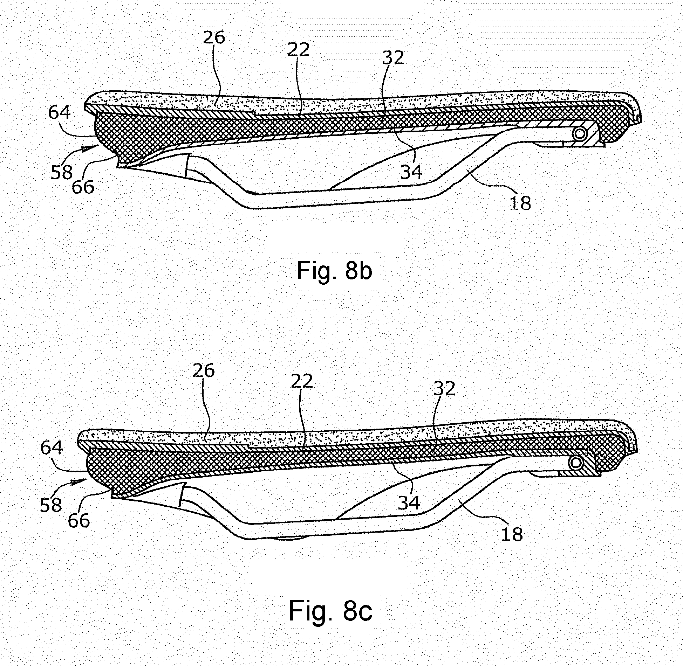

Die Fig. 8 zeigt einen Längsschnitt des Sattels entlang der Linie I-I in Fig. 7. Hieraus ist ersichtlich, dass die Seitenfläche 58 auch in einem hinteren Bereich des Sattels bzw. an der Rückseite des Sattels gekrümmt ausgebildet ist. Bevorzugt ist eine S-förmige Krümmung mit einer ersten Krümmung 64 und einer zweiten Krümmung 66 vorgesehen. Im dargestellten Ausführungsbeispiel verläuft die erste Krümmung 64 im Wesentlichen zunächst vertikal, wobei die Seitenfläche 58 sodann nach innen verläuft und in die konkave Krümmung 66 übergeht.

Die Fign. 8a bis 8c zeigen den hinteren Bereich des Sattels entsprechend der Schnittansicht (Fig. 9) in unterschiedlichen Belastungszuständen. Hierbei zeigt Fig. 8a eine statische Belastung von 80 kg, Fig. 8b eine statische Belastung von 135 kg und Fig. 8c eine statische Belastung von 190 kg. Aus den Fign. 8a bis 8c ist wiederum ersichtlich, dass die konkave Krümmung 66 mit zunehmender Belastung kleiner und die konvexe Krümmung 64 mit zunehmender Belastung größer wird.

Die vorstehend dargestellten und erläuterten statischen Belastungen des Elastomerkörpers 32 treten hinsichtlich der Verformung des Elastomerkörpers 32 auch bei dynamischen Belastungen entsprechend auf.

## Patentansprüche

1. Fahrradsattel mit
einer Sattelschale (22),
einem mit einer Oberseite (24) der Sattelschale (22) verbundenen Sattelpolster (26),
einem Trägerelement (34), das mit einem Sattelgestell (18) zur Verbindung mit einer Sattelstütze verbunden ist und
einem zwischen dem Trägerelement (34) und der Sattelschale (22) angeordneten Elastomerkörper (32),
wobei eine Seitenfläche (58) des Elastomerkörpers (32) zumindest teilweise gekrümmt ausgebildet ist,
**dadurch gekennzeichnet, dass**
eine Verbindungslinie (60) zwischen einem Rand der Sattelschale (22) und
einem Rand des Trägerelements (34) in einem Mittelbereich des Fahrradsattels (12) oder in einem in
Richtung des Mittelbereichs des Fahrradsattels (12) weisenden Bereich des Sitzbereichs (10)
gegenüber der Horizontalen (62) einen Winkel von 0° bis 30° aufweist.

2. Fahrradsattel nach Anspruch 1, **dadurch gekennzeichnet, dass** eine Verbindungslinie (60) zwischen einem Rand der Sattelschale (22) und einem Rand des Trägerelements (34) gegenüber der Horizontalen (62) im hinteren Bereich bzw. rückseitigen Bereich des Sattels einen Winkel von 30° bis 90°, insbesondere 40° bis 70° aufweist.

3. Fahrradsattel nach Anspruch 1 oder 2, **dadurch gekennzeichnet, dass** eine Verbindungslinie (60) zwischen einem Rand der Sattelschale (22) und einem Rand des Trägerelements (34) gegenüber einer Horizontalen (62) einen Winkel aufweist, der ausgehend von dem Mittelbereich (12) oder einem in Richtung des Mittelbereichs (12) weisenden Bereichs des Sitzbereichs (10) in Richtung der Rückseite des Sattels zunimmt.

4. Fahrradsattel nach einem der Ansprüche 1 bis 3, **dadurch gekennzeichnet, dass** das Trägerelement (34) in einer Draufsicht vollständig von der Sattelschale (22) überdeckt ist.

5. Fahrradsattel nach einem der Ansprüche 1 bis 4, **dadurch gekennzeichnet, dass** der Elastomerkörper (32) am Rand des Trägerelements (34), insbesondere im Mittelbereich (12) und/oder im Sitzbereich (10) ausschließlich oberhalb des Trägerelements (34) vorgesehen ist.

6. Fahrradsattel nach einem der Ansprüche 1 bis 5, **dadurch gekennzeichnet, dass** das Trägerelement (34) einstückig ausgebildet ist.

7. Fahrradsattel nach einem der Ansprüche 1 bis 6, **dadurch gekennzeichnet, dass** die Sattelschale (22) gegenüber dem Trägerelement (34) bei Belastung um eine sich in Längsrichtung (48) erstreckende Längsachse (49), vorzugsweise um einen Winkel von 2° bis 10°, insbesondere 2° bis 5° schwenkbar ist.

8. Fahrradsattel nach einem der Ansprüche 1 bis 7, **dadurch gekennzeichnet, dass** die Seitenfläche (58) eine zweifache Krümmung (64, 66) aufweist.

9. Fahrradsattel nach einem der Ansprüche 1 bis 8, **dadurch gekennzeichnet, dass** die Seitenfläche (58) ausgehend von der Sattelschale (22) einer erste konkave Krümmung (64) aufweist, wobei sich vorzugsweise an die erste Krümmung (64) in Richtung des Trägerelements (34) eine zweite konvexe Krümmung (66) anschließt.

10. Fahrradsattel nach einem der Ansprüche 1 bis 9, **dadurch gekennzeichnet, dass** die Seitenfläche (58) in Schnittansicht S-förmig gekrümmt ist.

11. Fahrradsattel nach einem der Ansprüche 1 bis 10, **dadurch gekennzeichnet, dass** der Elastomerkörper (32) TPU (thermoplastisches Polyurethan) aufweist bzw. aus TPU ausgebildet ist und/oder dass der Elastomerkörper (32) EVA (Ethylenvinylacetat) aufweist, bzw. aus EVA ausgebildet ist.

12. Fahrradsattel nach einem der Ansprüche 1 bis 11, **dadurch gekennzeichnet, dass** eine Außenkontur des Elastomerkörpers (32) einer Außenkontur des Fahrradsattels entspricht und/oder dass eine Außenkontur der Sattelschale (22) einer Außenkontur des Fahrradsattels entspricht.

## Claims

1. Bicycle saddle comprising
a saddle shell (22),
a saddle cushion (26) connected to an upper side (24) of the saddle shell (22),
a support element (34) connected to a saddle frame (18) for connection to a seat post, and
an elastomer body (32) arranged between the support element (34) and the saddle shell (22),
wherein a side surface (58) of the elastomer body (32) is at least partly curved in shape,
**characterized in that**
in a midportion of the bicycle saddle (12) or in a region of the seat region (10) facing towards the midportion of the bicycle saddle (12), a connecting line (60) between an edge of the saddle shell (22) and an edge of the support element (34) has an angle of 0° to 30° with respect to the horizontal line (62).

2. Bicycle saddle of claim 1, **characterized in that** in the rearward region or the rear region of the saddle, a connecting line (60) between an edge of the saddle shell (22) and an edge of the support element (34) has an angle of 30° to 90°, in particular 40° to 70°, with respect to the horizontal line (62).

3. Bicycle saddle of claim 1 or 2, **characterized in that**, starting from the midportion (12) or a region of the seat region (10) directed towards the midportion (12), a connecting line (60) between an edge of the saddle shell (22) and an edge of the support element (34) increases towards the rear of the saddle with respect to a horizontal line (62).

4. Bicycle saddle of one of claims 1 to 3, **characterized in that**, in top plan view, the support element (34) is fully covered by the saddle shell (22).

5. Bicycle saddle of one of claims 1 to 4, **characterized in that** at the edge of the support element (34), in particular in the midportion (12) and/or in the seat region (10), the elastomer body (32) is provided exclusively above the support element (34).

6. Bicycle saddle of one of claims 1 to 5, **characterized in that** the support element (34) is formed integrally.

7. Bicycle saddle of one of claims 1 to 6, **characterized in that**, when loaded, the saddle shell (22) is pivotable relative to the support element (34) about a longitudinal axis (49) extending in the longitudinal direction, preferably for an angle from 2° to 10°, in particular 2° to 5°.

8. Bicycle saddle of one of claims 1 to 7, **characterized in that** the side surface (58) has a double curvature (64, 66).

9. Bicycle saddle of one of claims 1 to 8, **characterized in that** the side surface (58) has a first, concave curvature (64), starting from the saddle shell (22), the first curvature (64) preferably being adjoined by a second, concave curvature (64) in the direction of the support element (34).

10. Bicycle saddle of one of claims 1 to 9, **characterized in that** the side surface (58) is curved in a S-shape, when seen in sectional view.

11. Bicycle saddle of one of claims 1 to 10, **characterized in that** the elastomer body (32) includes TPU (thermoplastic polyurethane) or is made of TPU, and/or that the elastomer body (32) includes EVA (ethylene vinyl acetate) or is made of EVA.

12. Bicycle saddle of one of claims 1 to 11, **characterized in that** an outer contour of the elastomer body (32) corresponds to an outer contour of the bicycle saddle and/or that an outer contour of the saddle shell (22) corresponds to an outer contour of the bicycle saddle.

## Revendications

1. Selle de bicyclette dotée
d'une coque de selle (22),
d'un rembourrage de selle (26) relié à une face supérieure (24) de la coque de selle (22),
d'un élément porteur (34), lequel est relié à un rail de selle (18) pour liaison avec un support de selle et
d'un corps élastomère (32) agencé entre l'élément porteur (34) et la coque de selle (22),
dans laquelle une surface latérale (58) du corps élastomère (32) est réalisée de manière au moins partiellement courbée ;
**caractérisée en ce que**
une ligne de raccordement (60) entre un bord de la coque de selle (22) et un bord de l'élément porteur (34) comporte un angle de 0° à 30° par rapport à l'horizontale (62) dans une zone médiane de la coque de selle (12) ou dans une zone de la zone d'assise (10) orientée en direction de la zone médiane de la coque de selle (12).

2. Selle de bicyclette selon la revendication 1, **caractérisée en ce qu'**une ligne de raccordement (60) entre un bord de la coque de selle (22) et un bord de l'élément porteur (34) comporte un angle de 30° à 90° par rapport à l'horizontale (62) dans la zone arrière ou dorsale de la selle, en particulier de 40° à 70°.

3. Selle de bicyclette selon la revendication 1 ou 2, **caractérisée en ce qu'**une ligne de raccordement (60) entre un bord de la coque de selle (22) et un bord de l'élément porteur (34) comporte un angle par rapport à l'horizontale (62) qui augmente en direction de la face arrière de la selle à partir de la zone médiane (12) ou d'une zone de la zone d'assise (10) orientée en direction de la zone médiane (12).

4. Selle de bicyclette selon l'une des revendications 1 à 3, **caractérisée en ce que** l'élément porteur (34) est, en vue de dessus, entièrement recouvert par la coque de selle (22).

5. Selle de bicyclette selon l'une des revendications 1 à 4, **caractérisée en ce que** le corps élastomère (32) est prévu sur le bord de l'élément porteur (34), en particulier dans la zone médiane (12) et/ou dans la zone d'assise (10) exclusivement au-dessus de l'élément porteur (34).

6. Selle de bicyclette selon l'une des revendications 1 à 5, **caractérisée en ce que** l'élément porteur (34) est réalisé d'une pièce.

7. Selle de bicyclette selon l'une des revendications 1 à 6, **caractérisée en ce que** la coque de selle (22) peut en cas de charge pivoter par rapport à l'élément porteur (34) autour d'un axe longitudinal (49) s'étendant dans la direction longitudinale (48), de préférence d'un angle de 2° à 10°, en particulier de 2° à 5°.

8. Selle de bicyclette selon l'une des revendications 1 à 7, **caractérisée en ce que** la surface latérale (58) comporte une courbure double (64, 66).

9. Selle de bicyclette selon l'une des revendications 1 à 8, **caractérisée en ce que** la surface latérale (58) comporte une première courbure concave (64) à partir de la coque de selle (22), dans laquelle une deuxième courbure convexe (66) se rattache de préférence à la première courbure (64) en direction de l'élément porteur (34).

10. Selle de bicyclette selon l'une des revendications 1 à 9, **caractérisée en ce que** la surface latérale (58) est recourbée en forme de S en vue en coupe.

11. Selle de bicyclette selon l'une des revendications 1 à 10, **caractérisée en ce que** le corps élastomère (32) comporte du TPU (polyuréthane thermoplastique) ou est réalisé en TPU et/ou **en ce que** le corps élastomère (32) comporte de l'EVA (éthylène-acétate de vinyle) ou est réalisé en EVA.

12. Selle de bicyclette selon l'une des revendications 1 à 11, **caractérisée en ce qu'**un contour externe du corps élastomère (32) correspond à un contour externe de la selle de bicyclette et/ou **en ce qu'**un contour externe de la coque de selle (22) correspond à un 30 contour externe de la selle de bicyclette.
